# EUROPÄISCHE PATENTSCHRIFT

(11) **EP 2 976 181 B1**
(45) Veröffentlichungstag und Bekanntmachung des Hinweises auf die Patenterteilung: **04.09.2019**
(21) Anmeldenummer: 14723316.7
(22) Anmeldetag: 18.03.2014
(51) Int. Cl.: B23P 15/10, B21K 1/18, F02F 3/00

(54) **VERFAHREN ZUR HERSTELLUNG EINES KOLBENS FÜR EINEN VERBRENNUNGSMOTOR**
METHOD FOR PRODUCING A PISTON FOR AN INTERNAL COMBUSTION ENGINE
PROCÉDÉ DE PRODUCTION D'UN PISTON POUR UN MOTEUR À COMBUSTION INTERNE

(30) Priorität: 18.03.2013 DE 102013004577; 28.08.2013 DE 102013014344
(43) Veröffentlichungstag der Anmeldung: 27.01.2016
(73) Patentinhaber: Mahle International GmbH, 70376 Stuttgart (DE)
(72) Erfinder: BERR, Gerhard, 71546 Aspach (DE); BOCZEK, Sascha-Oliver, 69234 Dielheim (DE); MÜLLER, Reiner, 78628 Rottweil (DE); SCHARP, Rainer, 71665 Vaihingen (DE)
(74) Vertreter: BRP Renaud & Partner mbB Rechtsanwälte Patentanwälte Steuerberater
(86) Internationale Anmeldenummer: PCT/DE2014/000139
(87) Internationale Veröffentlichungsnummer: WO 2014/146637

(56) Entgegenhaltungen:
- EP-A2- 1 077 323
- DE-A1-102007 061 601
- DE-A1-102011 013 067
- DE-A1-102011 013 141
- US-A1- 2012 080 004
- US-A1- 2012 222 645

## Beschreibung

Die vorliegende Erfindung betrifft ein Verfahren zur Herstellung eines Kolbens für einen Verbrennungsmotor, mit einem Kolbengrundkörper und einem Kolbenringteil, wobei der Kolbengrundkörper eine einen Dom aufweisende Verbrennungsmulde sowie mit Nabenbohrungen versehene Kolbennaben aufweist, welche über Laufflächen miteinander verbunden sind, wobei die Kolbenringpartie einen Kolbenboden, einen umlaufenden Feuersteg sowie eine umlaufende Ringpartie aufweist, und wobei der Kolbengrundkörper und die Kolbenringpartie einen umlaufenden Kühlkanal bilden.

Aus den deutschen Patentanmeldungen 10 2011 013 141 A1 und DE 10 2011 013 067 A1 ist ein Herstellungsverfahren für einen Kolben bekannt, wonach der Rohling des Kolbenoberteils im Bereich der gesamten Verbrennungsmulde fertig geschmiedet wird. Die Kontur der Verbrennungsmulde ist somit von der Nachbearbeitung ausgenommen. Dieses Herstellungsverfahren ist jedoch nur für Kolben anwendbar, bei denen das Kolbenoberteil den Kolbenkopf und das Kolbenunterteil den Kolbenschaft umfasst. Andere Kolbenstrukturen sind nicht realisierbar.

Die US 2012/0080004 A1 und EP 1 077 323 A2 zeigen ein Verfahren zum Herstellen eines Kolbens, bei welchem ein Kolbengrundkörper und ein Kolbenringteil jeweils vorgefertigt und danach miteinander verschweißt werden. Die US 2012/0080004 A1 offenbart ein Verfahren gemäß dem Oberbegriff des Anspruchs 1. Die Aufgabe der vorliegenden Erfindung besteht darin, ein gattungsgemäßes Verfahren so weiterzuentwickeln, dass unterschiedliche Kolbenstrukturen realisierbar sind.

Die Lösung besteht darin, dass in Schritt a) bei der Herstellung des Rohlings des Kolbengrundkörpers die Kontur der Verbrennungsmulde fertig hergestellt wird.

Das erfindungsgemäße Verfahren zeichnet sich dadurch aus, dass Kolben herstellbar sind, bei denen die Ringpartie aus einem anderen Werkstoff bestehen kann als die anderen Kolbenstrukturen. Es sind bspw. Kolben mit verstärkter Ringpartie realisierbar.

Vorteilhafte Weiterbildungen ergeben sich aus den Unteransprüchen.

In Schritt c) werden zweckmäßigerweise Kühlkanalbereiche in die Rohlinge eingebracht und/oder fertig bearbeitet, da die Kühlkanalbereiche nach dem Verschweißen der Rohlinge nicht mehr zugänglich sind.

Es ist ferner von Vorteil, in Schritt c) im Rohling des Kolbengrundkörpers der Innenraum fertig zu bearbeiten und in den Kühlkanalbereich Zu- und Ablauföffnungen für Kühlöl einzubringen. Der Kolbengrundkörper ist zu diesem Zweck einfacher zu handhaben als der geschweißte Kolbenkörper.

Ferner empfiehlt es sich aus den gleichen Erwägungen, in Schritt c) am Rohling des Kolbengrundkörpers und/oder des Kolbenringteils den Außendurchmesser vorzubearbeiten und/oder am Rohling des Kolbengrundkörpers die Kolbennaben vorzubearbeiten.

Erfindungsgemäß werden in Schritt e) die Nabenbohrungen in die Kolbennaben eingebracht, nachdem der Kolbenboden fertig bearbeitet ist. Da sich die Kompressionshöhe eines Kolbens aus dem Abstand zwischen Kolbenboden und Mittelachse der Nabenbohrung ergibt, kann auf besondere einfache Weise die vorbestimmte Kompressionshöhe des fertigen Kolbens erzielt werden.

Es können verschiedene Umformverfahren zur Herstellung des Rohlings des Kolbengrundkörpers gewählt werden. Der Rohling kann mittels Warmumformen bei 1.200°C bis 1.300°C geschmiedet und anschließend kaltkalibriert werden. Der Rohling kann auch mittels Warmumformen bei 1.200°C bis 1.300°C geschmiedet und anschließend bei einer Temperatur von höchstens 150°C kaltumgeformt werden. Der Rohling kann ferner mittels Halbwarmumformen bei 600°C bis 900°C geschmiedet werden. Zusätzlich kann der im Anschluss an das Halbwarmumformen bei einer Temperatur von höchstens 150°C kaltumgeformt werden. Schließlich kann der Rohling mittels Kaltumformen bei höchstens 150°C geschmiedet werden.

Ein Ausführungsbeispiel der vorliegenden Erfindung wird im Folgenden anhand der beigefügten Zeichnungen näher erläutert. Es zeigen in einer schematischen, nicht maßstabsgetreuen Darstellung:
- Figur 1: ein Ausführungsbeispiel eines mit dem erfindungsgemäßen Verfahren hergestellten Kolbens;
- Figur 2: ein erstes Ausführungsbeispiel je eines Rohlings eines Kolbengrundkörpers und eines Kolbenringteils für einen Kolben gemäß Figur 1;
- Figur 3: die Rohlinge gemäß Figur 2 nach erfolgter Vorbearbeitung;
- Figur 4: einen geschweißten Kolbenkörper aus den vorbearbeiteten Rohlingen gemäß Figur 3.

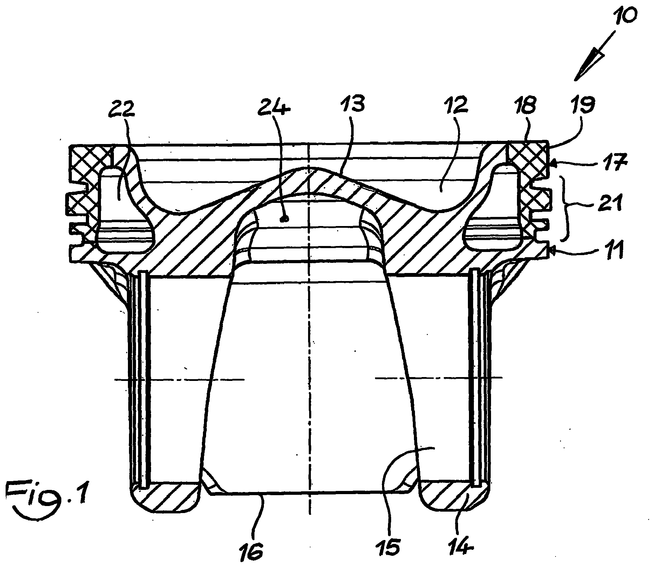

Figur 1 zeigt ein Ausführungsbeispiel eines erfindungsgemäßen Kolbens 10. Der Kolben 10 weist einen Kolbengrundkörper 11 mit einer einen zentralen Dom 13 versehenen Verbrennungsmulde 12 auf. Der Kolbengrundkörper 11 weist ferner in an sich bekannter Weise Kolbennaben 14 mit Nabenbohrungen 15 zur Aufnahme eines Kolbenbolzens (nicht dargestellt) und einen Innenraum 24 auf. Die Kolbennaben 14 sind über Laufflächen 16 miteinander verbunden.

Der Kolben 10 weist ferner ein Kolbenringteil 17 mit einem Kolbenboden 18, einem umlaufenden Feuersteg 19 und einer umlaufenden Ringpartie 21 mit Ringnuten zur Aufnahme von Kolbenringen (nicht dargestellt) auf. In Höhe der Ringpartie 21 ist ein umlaufender Kühlkanal 22 mit Zu- und Ablauföffnungen für Kühlöl (nicht dargestellt) vorgesehen.

Im vorliegenden Ausführungsbeispiel sind der Kolbengrundkörper 11 und das Kolbenringteil 17 mittels eines Schweißverfahrens, bspw. Elektronenstrahlschweißen oder Laserschweißen, miteinander verbunden.

Der Kolbengrundkörper 11 ist aus einem Werkstoff hergestellt, der einem Umformverfahren unterzogen werden kann. Typischerweise handelt es sich hierbei um einen Vergütungsstahl, bspw. 42CrMo4 oder einen AFP-Stahl wie 38MnVS6.

Erfindungsgemäß soll auch eine Verbrennungsmulde komplexer Geometrie herstellbar sein. Mittels des erfindungsgemäßen Verfahrens sollen ferner Verbrennungsmulden herstellbar sein, die gegenüber der Kolbenmittelachse radial versetzt oder geneigt angeordnet sind.

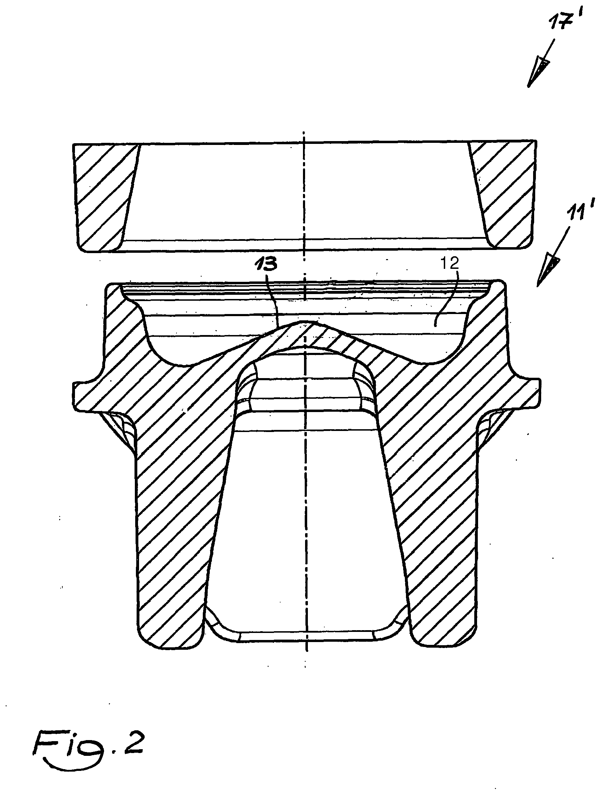

Zu diesem Zweck werden, wie in Figur 2 dargestellt, zunächst Rohlinge für den Kolbengrundkörper 11 und das Kolbenringteil 17 hergestellt. Der Rohling 11' für den Kolbengrundkörper 11 wurde im Ausführungsbeispiel mittels Warmumformen bei 1.200° bis 1.300° geschmiedet und durch anschließendes Kaltkalibrieren (Pressen der Oberflächen des Rohlings 11' bei Raumtemperatur) weiterbearbeitet.

Im Ausführungsbeispiel ist die Geometrie der Verbrennungsmulde 12 fertig geschmiedet. Das bedeutet, dass zur Herstellung der fertigen Kolbens 10 keinerlei Nachbearbeitung der Verbrennungsmulde 12 erforderlich ist.

Ein Rohling 17' des Kolbenringteils 17 kann aus jedem geeigneten Werkstoff bspw. durch Umformen oder Gießen hergestellt werden.

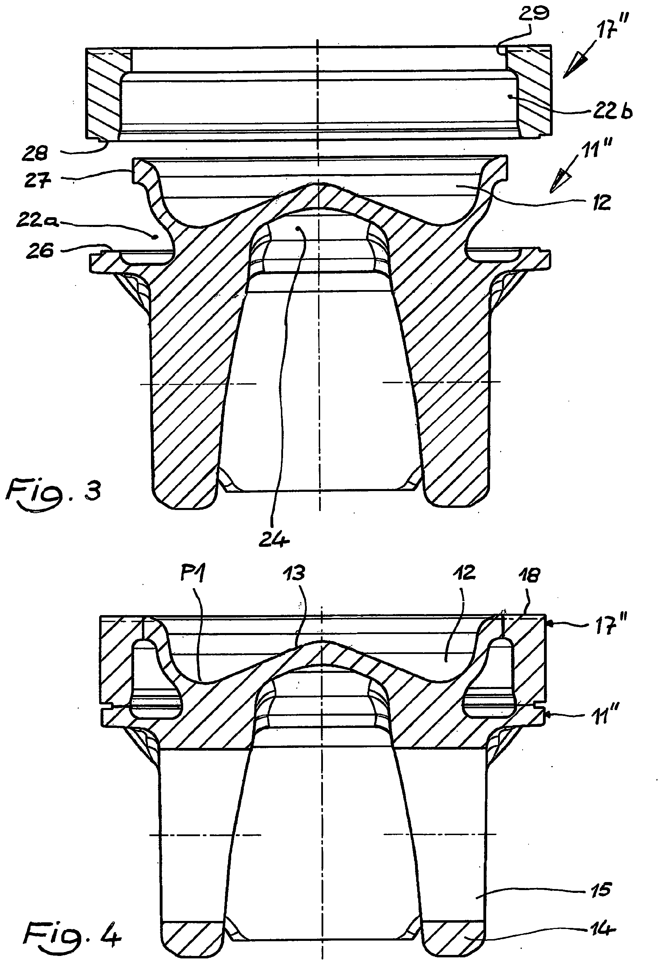

Wie es in Figur 3 dargestellt ist, können nach dem Schmieden die Rohlinge 11', 17' zu bearbeiteten Rohlingen 11", 17" vorbearbeitet werden. An beiden Rohlingen 11', 17' kann bspw. der Außendurchmesser vorbearbeitet werden.

Am Rohling 11' für den Kolbengrundkörper 11 kann auch der Nabenbereich vorbearbeitet werden. Schließlich kann der Innenraum 24 fertig bearbeitet werden. Außerdem wird ein Kühlkanalbereich 22a, der im fertigen Kolben 10 einen Teil des Kühlkanals 22 bildet, in den Rohling 11' eingearbeitet. Der Kühlkanalbereich 22a kann auch während des Schmiedens eingebracht werden und wird in diesem Fall nach dem Schmieden fertigbearbeitet. In den Kühlkanalbereich 22a werden die Zu- und Ablauföffnungen für Kühlöl eingebracht.

Am Rohling 17' für das Kolbenringteil 17 wird bspw. ein Kühlkanalbereich 22b, der im fertigen Kolben 10 einen Teil des Kühlkanals 22 bildet, in den Rohling 17' eingearbeitet.

Schließlich werden nach dem Schmieden in beiden Rohlingen 11', 17' die Schweißflächen 26, 27 bzw. 28, 29, über welche die Rohlinge 11', 17' miteinander verbunden werden sollen, fertigbearbeitet.

Nun werden die Rohlinge 11", 17" mittels eines geeigneten Schweißverfahrens über ihre Schweißflächen 26 und 28 bzw. 27 und 29 in an sich bekannter Weise zu einem Kolbenkörper 30 miteinander verbunden, wie er in Figur 4 dargestellt ist.

Zum Abschluss des erfindungsgemäßen Verfahrens wird der Kolbenkörper 30 fertig bearbeitet, indem bspw. die endgültige Feinkontur hergestellt, der Kolbenboden 18 fertig bearbeitet und die Ringnuten in die Ringpartie 21 sowie die Nabenbohrungen 15 in die Kolbennaben 14 eingebracht werden. Die Nabenbohrungen 15 werden derart eingebracht, dass sich aus ihrer Mittelachse in Bezug auf den Kolbenboden 18 die vorbestimmte Kompressionshöhe des fertigen Kolbens ergibt. Im Ergebnis wird ein Kolben gemäß Figur 1 erhalten.

## Patentansprüche

1. Verfahren zur Herstellung eines Kolbens (10) für einen Verbrennungsmotor mit einem Kolbengrundkörper (11) und einem Kolbenringteil (17), wobei der Kolbengrundkörper (11) eine einen Dom (13) aufweisende Verbrennungsmulde (12) sowie mit Nabenbohrungen (15) versehene Kolbennaben (14) aufweist, welche über Laufflächen (16) miteinander verbunden sind, wobei der Kolbenringteil (17) einen Kolbenboden (18), einen umlaufenden Feuersteg (19) sowie eine umlaufende Ringpartie (21) aufweist, und wobei der Kolbengrundkörper (11) und das Kolbenringteil (17) einen umlaufenden Kühlkanal (22) bilden, mit den folgenden Verfahrensschritten:
a) Herstellen eines Rohlings (11') des Kolbengrundkörpers (11) mittels eines Umformverfahrens, wobei die Kontur der Verbrennungsmulde (12) fertig hergestellt wird,
b) Herstellen eines Rohlings (17') des Kolbenringteils (17) mittels eines Umformverfahrens oder eines Gießverfahrens,
c) Vorbearbeiten der Rohlinge (11', 17') unter Fertigbearbeitung von Schweißflächen (26, 28; 27, 29);
d) Verbinden der vorbearbeiteten Rohlinge (11", 17") von Kolbengrundkörper (11) und Kolbenringteil (17) zu einem Kolbenkörper (30) mittels eines Schweißverfahrens,
e) Nachbearbeiten und/oder Fertigbearbeiten des Kolbenkörpers (30) zum fertigen Kolben (10),
**dadurch gekennzeichnet,**
**dass** in Schritt e) die Nabenbohrungen (15) in die Kolbennaben (14) eingebracht werden, nachdem der Kolbenboden (18) fertig bearbeitet ist.

2. Verfahren nach Anspruch 1, **dadurch gekennzeichnet, dass** in Schritt c) Kühlkanalbereiche (22a, 22b) in die Rohlinge (11', 17') eingebracht und/oder fertig bearbeitet werden.

3. Verfahren nach Anspruch 1, **dadurch gekennzeichnet, dass** in Schritt c) im Rohling (11') des Kolbengrundkörpers (11) der Innenraum (24) fertig bearbeitet wird und in den Kühlkanalbereich (22a) Zu- und Ablauföffnungen für Kühlöl eingebracht werden.

4. Verfahren nach Anspruch 1, **dadurch gekennzeichnet, dass** in Schritt c) am Rohling (11'; 17') des Kolbengrundkörpers (11) und/oder des Kolbenringteils (17) der Außendurchmesser vorbearbeitet wird und/oder dass am Rohling (11') des Kolbengrundkörpers (11) die Kolbennaben (14) vorbearbeitet werden.

5. Verfahren nach Anspruch 1, **dadurch gekennzeichnet, dass** der Rohling (11') des Kolbengrundkörpers (11) mittels Warmumformen bei 1.200°C bis 1.300°C geschmiedet und anschließend kaltkalibriert wird.

6. Verfahren nach Anspruch 1, **dadurch gekennzeichnet, dass** der Rohling (11') des Kolbengrundkörpers (11) mittels Warmumformen bei 1.200°C bis 1.300°C geschmiedet und anschließend bei einer Temperatur von höchstens 150°C kaltumgeformt wird.

7. Verfahren nach Anspruch 1, **dadurch gekennzeichnet, dass** der Rohling (11') des Kolbengrundkörpers (11) mittels Halbwarmumformen bei 600°C bis 900°C geschmiedet wird.

8. Verfahren nach Anspruch 7, **dadurch gekennzeichnet, dass** der Rohling (11') des Kolbengrundkörpers (11) im Anschluss an das Halbwarmumformen bei einer Temperatur von höchstens 150°C kaltumgeformt wird.

9. Verfahren nach Anspruch 1, **dadurch gekennzeichnet, dass** der Rohling (11') des Kolbengrundkörpers (11) mittels Kaltumformen bei höchstens 150°C geschmiedet wird.

## Claims

1. Method for producing a piston (10) for an internal combustion engine having a piston base body (11) and a piston ring part (17), wherein the piston base body (11) has a combustion cavity (12) having a dome (13) and piston hubs (14) furnished with hub bores (15), which piston hubs are connected with one another via bearing surfaces (16), wherein the piston ring part (17) has a piston head (18), a surrounding top land (19) and a surrounding ring part (21), and wherein the piston base body (11) and the piston ring part (17) form a surrounding cooling duct (22), having the following method steps:
a) producing a blank (11') of the piston base body (11) by means of a forming method, wherein the contour of the combustion cavity (12) is complete,
b) producing a blank (17') of the piston ring part (17) by means of a forming method or a casting process,
c) pre-processing the blanks (11', 17') by finishing welding surfaces (26, 28; 27, 29);
d) connecting the pre-processed blanks (11", 17") of piston base body (11) and piston ring part (17) to form a piston body (30) by means of a welding method,
e) post-processing and/or finishing the piston body (30) to form a finished piston (10),
**characterised in**
**that** in step e) the hub bores (15) are introduced into the piston hubs (14), after the piston head (18) is finished.

2. Method according to claim 1, **characterised in that** in step c) cooling duct regions (22a, 22b) are introduced into the blanks (11', 17') and/or finished.

3. Method according to claim 1, **characterised in that** in step c) in the blank (11') of the piston base body (11) the inner chamber (24) is finished and feed openings and discharge openings for cooling oil are introduced into the cooling duct region (22a).

4. Method according to claim 1, **characterised in that** in step c) on the blank (11'; 17') of the piston base body (11) and/or of the piston ring part (17) the outer diameter is pre-processed and/or that on the blank (11') of the piston base body (11) the piston hubs (14) are pre-processed.

5. Method according to claim 1, **characterised in that** the blank (11') of the piston base body (11) is forged by means of hot forming at 1,200 °C to 1,300 °C and is subsequently cold calibrated.

6. Method according to claim 1, **characterised in that** the blank (11') of the piston base body (11) is forged by means of hot forming at 1,200 °C to 1,300 °C and is subsequently cold formed at a temperature of maximum 150 °C.

7. Method according to claim 1, **characterised in that** the blank (11') of the piston base body (11) is forged by means of medium temperature forming at 600 °C to 900 °C.

8. Method according to claim 7, **characterised in that** the blank (11') of the piston base body (11), subsequently to the medium temperature forming, is cold formed at a temperature of maximum 150 °C.

9. Method according to claim 1, **characterised in that** the blank (11') of the piston base body (11) is forged by means of cold forming at maximum 150 °C.

## Revendications

1. Procédé de fabrication d'un piston (10) pour un moteur à combustion interne ayant un corps de base de piston (11) et un élément de segment de piston (17), dans lequel le corps de base de piston (11) présente une cavité de combustion (12) présentant un dôme (13) et des moyeux de piston (14) pourvus d'alésages de moyeu (15), qui sont reliés mutuellement par des surfaces de glissement (16), dans lequel l'élément de segment de piston (17) présente un fond de piston (18), un cordon de feu périphérique (19) et une partie annulaire périphérique (21), et dans lequel le corps de base de piston (11) et l'élément de segment de piston (17) forment un canal de refroidissement (22) périphérique, avec les étapes de procédé suivantes consistant à :
a) fabriquer une ébauche (11') du corps de base de piston (11) au moyen d'un procédé de façonnage, dans lequel le contour de la cavité de combustion (12) est fabriqué à finition,
b) fabriquer une ébauche (17') de l'élément de segment de piston (17) au moyen d'un procédé de façonnage ou d'un procédé de coulée,
c) pré-usiner les ébauches (11', 17') avec finition de surfaces soudées (26, 28 ; 27, 29) ;
d) relier les ébauches (11", 17") pré-usinées à partir du corps de base de piston (11) et de l'élément de segment de piston (17) jusqu'à un corps de piston (30) au moyen d'un procédé de soudage,
e) ré-usiner et/ou usiner à finition le corps de piston (30) pour obtenir un piston fini (10),
**caractérisé en ce que**
dans l'étape e), les alésages de moyeu (15) sont incorporés dans les moyeux de piston (14), une fois le fond de piston (18) terminée.

2. Procédé selon la revendication 1, **caractérisé en ce que** dans l'étape c), des régions de canal de refroidissement (22a, 22b) sont incorporées et/ou usinées à finition dans les ébauches (11', 17').

3. Procédé selon la revendication 1, **caractérisé en ce que** dans l'étape c), l'intérieur (24) est usiné à finition dans l'ébauche (11') du corps de base de piston (11), et des ouvertures d'entrée et de sortie sont incorporées dans la région de canal de refroidissement (22a) pour une huile de refroidissement.

4. Procédé selon la revendication 1, **caractérisé en ce que**, dans l'étape c), le diamètre extérieur est pré-usiné sur les ébauches (11' ; 17') du corps de base du piston (11) et/ou de l'élément de segment de piston (17), et/ou **en ce que** les moyeux de piston (14) sont pré-usinés sur l'ébauche (11') du corps de base de piston (11).

5. Procédé selon la revendication 1, **caractérisé en ce que** l'ébauche (11') du corps de base de piston (11) est forgée par façonnage à chaud à une température de 1 200 °C à 1 300 °C, puis étalonnée à froid.

6. Procédé selon la revendication 1, **caractérisé en ce que** l'ébauche (11') du corps de base de piston (11) est forgée par façonnage à chaud à une température de 1 200 °C à 1 300 °C, puis déformée à froid à une température d'au plus 150 °C.

7. Procédé selon la revendication 1, **caractérisé en ce que** l'ébauche (11') du corps de base du piston (11) est forgée par façonnage à tiède à une température de 600 °C à 900 °C.

8. Procédé selon la revendication 7, **caractérisé en ce que** l'ébauche (11') du corps de base du piston (11) est déformée à froid après le façonnage à tiède à une température d'au plus 150 °C.

9. Procédé selon la revendication 1, **caractérisé en ce que** l'ébauche (11') du corps de base de piston (11) est forgée par façonnage à froid à 150 °C maximum.
